# NEUE EUROPÄISCHE PATENTSCHRIFT

(11) **EP 2 294 151 B2**
(45) Veröffentlichungstag und Bekanntmachung des Hinweises auf die Entscheidung über den Einspruch: **21.12.2022**
(45) Hinweis auf die Patenterteilung: 24.12.2014
(21) Anmeldenummer: 09768997.0
(22) Anmeldetag: 25.06.2009
(51) Int. Cl.: C09D 175/04, C08G 18/28, C08G 18/79, C08G 18/80, C08G 18/62, C08G 18/10

(54) **VERWENDUNG TEILSILANISIERTER VERBINDUNGEN AUF POLYISOCYANATBASIS ALS VERNETZUNGSMITTEL IN BESCHICHTUNGSZUSAMMENSETZUNGEN UND BESCHICHTUNGSZUSAMMENSETZUNG ENTHALTEND DIE VERBINDUNGEN**
USE OF PARTIALLY SILANIZED POLYISOCYANATE-BASED COMPOUNDS AS CROSS-LINKING AGENTS IN COATING COMPOSITIONS, AND COATING COMPOSITIONS COMPRISING THE COMPOUNDS
UTILISATION DE COMPOSÉS PARTIELLEMENT SILANISÉS À BASE DE POLYISOCYANATE EN TANT QU AGENTS DE RÉTICULATION DANS DES COMPOSITIONS DE REVÊTEMENT ET COMPOSITION DE REVÊTEMENT CONTENANT LES COMPOSÉS

(30) Priorität: 25.06.2008 DE 102008030304
(43) Veröffentlichungstag der Anmeldung: 16.03.2011
(73) Patentinhaber: BASF Coatings GmbH, 48165 Münster (DE)
(72) Erfinder: GROENEWOLT, Matthijs, 48147 Münster (DE); HESENER, Simone, 48165 Münster (DE); STÜBBE, Wilfried, 48268 Greven (DE); NIEMEIER, Manuela, 48317 Drensteinfurt (DE); WESTHOFF, Elke, 48565 Steinfurt (DE)
(74) Vertreter: BASF IP Association
(86) Internationale Anmeldenummer: PCT/EP2009/004581
(87) Internationale Veröffentlichungsnummer: WO 2009/156148

(56) Entgegenhaltungen:
- EP-A1- 1 193 278
- DE-A1- 10 103 027

## Beschreibung

Die Erfindung betrifft die Verwendung teilsilanisierter Verbindungen auf Polyisocyanatbasis als Vernetzungsmittel mit erhöhtem Brechungsindex in härtbaren Beschichtungszusammensetzungen, nämlich in Klarlacken als oberste Schichten für die Automobillackierung. Die Erfindung betrifft ebenfalls eine Beschichtungszusammensetzung, nämlich einen Klarlack, die diese Verbindungen als Vernetzungsmittel enthält, und die Verwendung der Beschichtungszusammensetzung zur Herstellung einer Beschichtung.

Teilsilanisierte Vernetzungsmittel auf Basis von Hexamethylendiisocyanat sind aus dem Stand der Technik bekannt (EP 1 273 640 A2, EP 1 193 278 A1). Die damit erhaltenen Beschichtungen zeichnen sich durch Kratzfestigkeit und Bewitterungsstabilität aus, da sie die Vorzüge von rein organischen Beschichtungsssytemen mit denen von anorganischen Beschichtungen verbinden.

Diese Beschichtungen sind prinzipiell für alle Anwendungen geeignet, die erhöhte Anforderungen an mechanische Belastungen stellen. Ein spezieller Fall einer Anwendung, bei der derartige mechanische Eigenschaften von Interesse sind, ist die Automobillackierung. Diese ist nicht nur von hohen Anforderungen an die funktionellen Eigenschaften der Beschichtungen geprägt, sondern stellt ebenfalls hohe Anforderungen an die dekorativen Eigenschaften.

So ist es erforderlich, dass die Oberfläche besonders glatt ist und gegebenenfalls die unter einer Klarlackschicht liegende Basislackschicht in ihrer Eigenschaft als farbgebende Schicht nicht beeinträchtigt, sondern vielmehr unterstützt wird. Aus diesem Grund sind besonders transparente und hochglänzende Klarlacke wünschenswert. Dabei sollen allerdings die anderen vorteilhaften Eigenschaften wie hohe Säurefestigkeit, Glätte und Kratzfestigkeit der Beschichtung erhalten bleiben.

Der Glanz als Reflexionswert des Lichtes bei einem definierten Einfallswinkel hängt stark vom Brechungsindex des Lacks ab. Dabei wird umso mehr Licht reflektiert, je höher der Unterschied des Brechungsindex von Umgebungsmedium und Lackschicht ist. Daher wird eine hochglänzende und brilliante Oberfläche erhalten, wenn beispielsweise ein Lack auf Polyesterbasis verwendet wird, da Polyester einen hohen Brechungsindex besitzen. Der Brechungsindex eines Lacks lässt sich ebenfalls durch den Zusatz von entsprechenden Füllstoffen wie beispielsweise Kieselsäure erhöhen.

Es wurde bisher noch kein Verfahren beschrieben, das es ermöglicht, mit Hilfe von teilsilanisierten, isocyanathaltigen Vernetzungsmitteln den Brechungsindex des Vernetzungsmittels einzustellen und/oder den Brechungsindex des Vernetzungsmittels zu erhöhen.

### Aufgabe und Lösung

Eine Aufgabe der vorliegenden Erfindung war es daher, für die Herstellung einer Beschichtungszusammensetzung Vernetzungsmittel basierend auf isocyanathaltigen Verbindungen zur Verfügung zu stellen, die einen erhöhten Brechungsindex, insbesondere einen Brechungsindex nD20 ≥ 1.500, aufweisen.

Eine weitere Aufgabe der vorliegenden Erfindung war es, eine Beschichtungszusammensetzung (Lack) zur Verfügung zu stellen, die zu einer Beschichtung (Lackfilm) führt, die eine erhöhte Lichtreflexion zeigt und einen höheren Glanz aufweist als die aus dem Stand der Technik bekannten Lackfilme. Die Beschichtungszusammensetzung soll sich insbesondere für die Herstellung der Klarlackschicht bei OEM-Serienlackierungen und zum Einsatz bei Automobilreparaturlackierungen eignen.

Weiterhin soll der Lackfilm auch den weiteren funktionellen Anforderungen an Beschichtungen und Lackierungen, insbesondere an Klarlackierungen, in dem technologisch und ästhetisch besonders anspruchsvollen Gebiet der Automobilserienlackierung (OEM) genügen. Die Beschichtung soll daher eine hohe Säurefestigkeit zeigen. Daneben soll die Beschichtung hochgradig kratzfest sein und insbesondere einen hohen Glanzerhalt nach Kratzbelastung aufweisen. Weiterhin soll sich die Beschichtung und Lackierung, speziell die Klarlackierung, auch in Schichtdicken >40 µm herstellen lassen, ohne dass Spannungsrisse auftreten. Darüber hinaus soll die Applikation der Beschichtungszusammensetzung keine ökologischen Probleme bereiten.

### Lösung der Aufgabe

Die Aufgabe wird gelöst durch die Verwendung einer Verbindung (V) als Vernetzungsmittel in einem Klarlack gemäß Anspruch 1 und gemäß Anspruch 8.

Die Umsetzungsprodukte der isocyanathaltigen Verbindungen (A) mit Verbindungen der allgemeinen Formel (I) sind als solche aus der WO 2005/012382 A1 bekannt. Sie werden dort als Zwischenprodukte bei der Herstellung einer Primerzusammensetzung für Glas und Glaskeramiken mit einem Aminosilan weiter umgesetzt.

Der Begriff "Alkyl" umfasst im Sinne der vorliegenden Erfindung azyklische gesättigte Kohlenwasserstoffreste, die verzweigt oder geradkettig sowie unsubstituiert oder wenigstens einfach substituiert sein können, mit wie im Fall von C₁₋₁₂-Alkyl 1-12 (das heißt 1, 2, 3, 4, 5, 6, 7, 8, 9, 10, 11 oder 12) C-Atomen. Sofern einer oder mehrere der Substituenten für ein Alkylrest stehen, der substituiert ist, kann dieser bevorzugt mit gegebenenfalls 1, 2, 3, 4 oder 5, besonders bevorzugt mit 1, 2 oder 3, Substituenten, unabhängig voneinander ausgewählt aus der Gruppe bestehend aus F, Cl, Br, I, -NO₂, -CN, und -CF₃, substituiert sein.

Als geeignete C₁₋₁₂-Alkyl-Reste, die unsubstituiert oder einfach oder mehrfach substituiert sein können, seien beispielsweise Methyl, Ethyl, n-Propyl, Isopropyl, n-Butyl, Isobutyl, 2-Butyl, tert-Butyl, n-Pentyl, 2-Pentyl, 3-Pentyl, Isopentyl, Neopentyl, n-Hexyl, 2-Hexyl, 3-Hexyl, n-Heptyl, n-Octyl und n-Nonyl genannt.

Unter mehrfach substituierten Alkylresten sind solche Alkylreste zu verstehen, die entweder an verschiedenen oder an gleichen C-Atomen mehrfach, bevorzugt zwei- oder dreifach substituiert sind, beispielsweise dreifach am gleichen C-Atom wie im Fall von -CF₃ oder an verschiedenen Stellen wie im Fall von -(CHCl)-(CH₂F). Die Mehrfachsubstitution kann mit dem gleichen oder mit verschiedenen Substituenten erfolgen. Als geeignete substituierte Alkylreste seien beispielsweise -CF₃, -CF₂H, -CFH₂, -(CH₂)-(CF₃)-(CH₂)-(CHF₂) und -(CH₂)-(CH₂F) genannt.

Der Begriff "Heteroalkyl" bezeichnet einen wie vorstehend beschriebenen Alkylrest, in dem ein oder mehrere C-Atom(e) jeweils durch ein Heteroatom unabhängig voneinander ausgewählt aus der Gruppe bestehend aus Sauerstoff, Schwefel und Stickstoff (NH) ersetzt wurden. Heteroalkylreste können bevorzugt 1, 2 oder 3 Heteroatom(e) unabhängig voneinander ausgewählt aus der Gruppe bestehend aus Sauerstoff, Schwefel und Stickstoff (NH) als Kettenglieder aufweisen. Heteroalkylreste können bevorzugt zwei- bis zwölfgliedrig sein.

Als geeignete Heteroalkyl-Reste, die unsubstituiert oder einfach oder mehrfach substituiert sein können, seien beispielsweise -CH₂-O-CH₃, -CH₂-O-C₂H₅, -CH₂-O-CH(CH₃)₂, -CH₂-O-C(CH₃)₃, -CH₂-S-CH₃, -CH₂-S-C₂H₅, -CH₂-S-CH(CH₃)₂, -CH₂-S-C(CH₃)₃, -CH₂-NH-CH₃, -CH₂-NH-C₂H₅, -CH₂-NH-CH(CH₃)₂, -CH₂-NH-C(CH₃)₃, -CH₂-CH₂-O-CH₃, -CH₂-CH₂-O-C₂H₅, -CH₂-CH₂-O-CH(CH₃)₂, -CH₂-CH₂-O-C(CH₃)₃, -CH₂-CH₂-S-CH₃, -CH₂-CH₂-S-C₂H₅, -CH₂-CH₂-S-CH(CH₃)₂, -CH₂-CH₂-S-C(CH₃)₃, -CH₂-CH₂-NH-CH₃, -CH₂-CH₂-NH-C₂H₅, -CH₂-CH₂-NH-CH(CH₃)₂, -CH₂-CH₂-NH-C(CH₃)₃, -CH₂-S-CH₂-O-CH₃, -CH₂-O-CH₂-O-C₂H₅, -CH₂-O-CH₂-O-CH(CH₃)₂, -CH₂-S-CH₂-O-C(CH₃)₃, -CH₂-O-CH₂-S-CH₃, -CH₂-O-CH₂-S-C₂H₅, -CH₂-O-CH₂-S-CH(CH₃)₂, -CH₂-NH-CH₂-S-C(CH₃)₃, -CH₂-O-CH₂-NH-CH₃, -CH₂-O-CH₂-NH-C₂H₅, -CH₂-O-CH₂-NH-CH(CH₃)₂, -CH₂-S-CH₂-NH-C(CH₃)₃ und -CH₂-CH₂-C(H)(CH₃)-(CH₂)₃-CH₃ genannt.

Als geeignete substituierte Heteroalkyl-Reste seien beispielsweise -(CH₂)-O-(CF₃),-(CH₂)-O-(CHF₂), -(CH₂)-O-(CH₂F), -(CH₂)-S-(CF₃), -(CH₂)-S-(CHF₂), -(CH₂)-S-(CH₂F), -(CH₂)-(CH₂)-O-(CF₃), -(CF₂)-O-(CF₃), -(CH₂)-(CH₂)-S-(CF₃) und -(CH₂)-(CH₂)-(CH₂)-O-(CF₃) genannt.

Vorzugsweise sind 5 bis 95 mol-%, besonders bevorzugt 10 bis 90 mol-%, ganz besonders bevorzugt 20 bis 80 mol-% und noch weiter bevorzugt 30 bis 70 mol-% der ursprünglich vorhandenen Isocyanatgruppen der isocyanathaltigen Verbindung (A) mit mindestens einer Verbindung der allgemeinen Formel (I) umgesetzt.

Durch die Umsetzung von Isocyanatgruppen der isocyanathaltigen Verbindung (A) mit Verbindungen der allgemeinen Formel (I) ergeben sich Thiourethangruppen, die eine Struktureinheit der Formel (II), 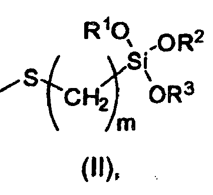 aufweisen,
wobei m, R¹, R² und R³ die vorstehend genannte Bedeutung haben.

Im Hinblick auf den Stand der Technik war es überraschend und für den Fachmann nicht vorhersehbar, dass die Aufgaben, die der vorliegenden Erfindung zugrunde lagen, durch die Verwendung einer wie vorstehend definierten Verbindung (V) als Vernetzungsmittel in einer Klarlackzusammensetzung gelöst werden konnten.

Die vorstehend definierten Verbindungen (V) zeigen einen erhöhten Brechungsindex und lassen sich in Beschichtungszusammensetzungen einsetzen, die Klarlackierungen, liefern, die einen hohen Glanz zeigen. Insbesondere führen die Beschichtungszusammensetzungen, die eine wie vorstehend definierte Verbindung (V) als Vernetzungsmittel enthalten, zu Beschichtungen mit einem höheren Glanz als aus dem Stand der Technik bekannte Beschichtungsmittel, die aminofunktionelle Silane enthalten.

Weiterhin sind die Beschichtungen, die sich durch Verwendung einer wie vorstehend definierten Verbindung (V) als Vernetzungsmittel in einer Beschichtungszusammensetzung erhalten lassen, kratzfest und säureresistent. Ebenfalls lassen sich diese Beschichtungen und Lackierungen, speziell die Klarlackierungen, auch in Schichtdicken >40 µm herstellen, ohne dass Spannungsrisse auftreten. Deswegen können diese Beschichtungen und Lackierungen, insbesondere die Klarlackierungen, in dem technologisch und ästhetisch besonders anspruchsvollen Gebiet der Automobilserienlackierung (OEM) eingesetzt werden.

Bevorzugt ist die Verwendung einer wie vorstehend definierten Verbindung (V), basierend auf der Umsetzung mindestens einer isocyanathaltigen Verbindung (A) mit mindestens einer Verbindung der allgemeinen Formel (I),
wobei
m gleich 2, 3 oder 4 ist;
   und
R¹, R² und R³, unabhängig voneinander, jeweils für H, unsubstituiertes C₁-₁₂ Alkyl oder unsubstituiertes 2- bis 12-gliedriges Heteroalkyl stehen.

Besonders bevorzugt ist die Verwendung einer wie vorstehend definierten Verbindung (V), basierend auf der Umsetzung mindestens einer isocyanathaltigen Verbindung (A) mit mindestens einer Verbindung der allgemeinen Formel (I),
wobei
m gleich 3 ist;
   und
R¹, R² und R³, unabhängig voneinander, jeweils für H, Methyl, Ethyl, n-Propyl, Isopropyl, n-Butyl, Isobutyl, 2-Butyl, tert-Butyl, n-Pentyl, 2-Pentyl, iso-Pentyl oder neo-Pentyl stehen.

Ganz besonders bevorzugt ist die Verwendung einer wie vorstehend definierten Verbindung (V), basierend auf der Umsetzung mindestens einer isocyanathaltigen Verbindung (A) mit mindestens einer Verbindung der allgemeinen Formel (I), wobei
m gleich 3 ist;
und R¹, R² und R³, unabhängig voneinander, jeweils für Ethyl oder Methyl stehen.

### Beschreibung der Erfindung

### Die isocyanatgruppenhaltigen Verbindungen (A)

Die als Grundkörper für die isocyanatgruppenhaltigen Verbindungen (A) mit einer mittleren NCO-Funktionalität von 2,0 bis 6,0 dienenden Polyisocyanate sind bevorzugt an sich bekannte substituierte oder unsubstituierte aromatische, aliphatische, cycloaliphatische und/oder heterozyklische Polyisocyanate.

Beispiele für bevorzugt verwendete Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenyldiisocyanat, Tetramethylen-1,4-diisocyanat, Hexamethylen-1,6-diisocyanat, 2,2,4-Trimethylhexan-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ^{®} W der Fa. Bayer AG), Tetramethylxylyldiisocyanate (z.B. TMXDI ^{®} der Fa. American Cyanamid) und Mischungen der vorgenannten Polyisocyanate. Weiterhin bevorzugte Polyisocyanate sind die durch Trimerisierung, Dimerisierung, Urethan-, Biuret- oder Allophanatbildung von einem Polyisocyanat abgeleiteten Polyisocyanate.

Besonders bevorzugt verwendete Polyisocyanate sind Hexamethylen-1,6-diisocyanat, Isophorondiisocyanat und 4,4'-Methylendicyclohexyldiisocyanat. Besonders bevorzugt sind auch die aus Hexamethylen-1,6-diisocyanat, Isophorondiisocyanat oder 4,4'-Methylendicyclohexyldiisocyanat durch Trimerisierung, Dimerisierung, Urethan-, Biuret- oder Allophanatbildung abgeleiteten Polyisocyanate, insbesondere die aus den vorgenannten Grundkörpern abgeleiteten Biuret-Dimere und Isocyanurat-Trimere.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4,598,131 beschrieben.

Die ganz besonders bevorzugt verwendeten, mit den Struktureinheiten der Formel (II) funktionalisierten Verbindungen (V) werden besonders bevorzugt durch Umsetzung der vorgenannten Polyisocyanate mit mindestens einer Verbindung der allgemeinen Formel (I), 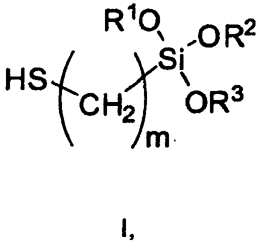 hergestellt,
wobei m, R¹, R² und R³ die vorstehend genannten Bedeutungen haben.

Bevorzugt werden zwischen 0,1 bis 99 mol-%, besonders bevorzugt zwischen 5 bis 95 mol-%, ganz besonders bevorzugt zwischen 10 bis 90 mol-%, noch weiter bevorzugt zwischen 20 bis 80 mol-%, am weitesten bevorzugt zwischen 30 bis 70 mol-% der ursprünglich vorhandenen Isocyanatgruppen der isocyanathaltigen Verbindungen (A) mit mindestens einer Verbindung der allgemeinen Formel (I) umgesetzt.

Besonders bevorzugt verwendete Verbindungen der allgemeinen Formel (I) sind 2-Mercaptoethyltrimethoxisilan, 3-Mercaptopropyltrimethoxysilan und 4-Mercaptobutyltrimethoxysilan. Ganz besonders bevorzugt ist die Verwendung von 3-Mercaptopropyltrimethoxysilan. Solche funktionalisierten Silane sind beispielsweise unter dem Markennamen Dynasylan^{®} MTMO der Firma Evonik verfügbar. Besonders bevorzugt verwendete Verbindungen (V) sind Umsetzungsprodukte von Hexamethylen-1,6-Diisocyanat und/oder Isophorondiisocyanat, und/oder deren Isocyanurat-Trimeren mit 3- Mercaptopropyltrimethoxysilan.

Die Umsetzung der isocyanatgruppenhaltigen Verbindungen (A) mit den Verbindungen (I) erfolgt vorzugsweise in Inertgasatmosphäre bei Temperaturen von maximal 100°C, bevorzugt von maximal 60°C.

Die nicht umgesetzten Isocyanatgruppen der Verbindung (V) können auch in blockierter Form vorliegen. Dies ist bevorzugt dann der Fall, wenn Beschichtungszusammensetzungen als Einkomponenten-Systeme eingesetzt werden. Zur Blockierung kann im Prinzip jedes für die Blockierung von Polyisocyanaten einsetzbare Blockierungsmittel mit einer ausreichend tiefen Deblockierungstemperatur eingesetzt werden. Derartige Blockierungsmittel sind dem Fachmann gut geläufig. Bevorzugt werden Blockierungsmittel, wie sie in EP-A-0626888 und EP-A-0692007 beschrieben sind, eingesetzt.

Die verwendeten Verbindungen (V) können zusätzlich als Umsetzungsprodukte von aminofunktionellen Silanen vorliegen.

Bevorzugt verwendete aminofunktionelle Silane sind Bis(2-ethyltrimethoxysilyl)amin, Bis(3-propyltrimethoxysilyl)amin, Bis(4-butyltrimethoxysilyl)amin, Bis(2-ethyltriethoxysilyl)amin, Bis(3-propyltriethoxysilyl)amin und/oder Bis(4-butyltriethoxysilyl)amin. Solche Aminosilane sind beispielsweise unter dem Markennamen DYNASILAN ^{®} der Fa. DEGUSSA bzw. Silquest ^{®} der Fa. OSI verfügbar.

Ebenfalls bevorzugt verwendete aminofunktionelle Silane sind 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan, 4-Aminobutyltriethoxysilan, 2-Hydroxyethyltrimethoxysilan, 2-Hydroxyethyltriethoxysilan, 3-Hydroxypropyl-trimethoxysilan, 3-Hydroxypropyltriethoxysilan, 4-Hydroxybutylrimethoxysilan und 4-Hydroxybutyltriethoxysilan.

Besonders bevorzugt verwendete aminofunktionelle Silane sind N-(2-(Trimethoxysilyl)ethyl)alkylamin, N-(3-(Trimethoxysilyl)propyl)alkylamin, N-(4-(Trimethoxysilyl)-butyl)alkylamin, N-(2-(Triethoxysilyl)ethyl)alkylamin, N-(3-(Triethoxysilyl)propyl)alkylamin und/oder N-(4-(Triethoxysilyl)butyl)alkylamin

Ganz besonders bevorzugt werden als aminofunktionelles Silane N-(3-(Trimethoxysilyl)propyl)butylamin sowie Bis(3-trimethoxysilylpropyl)amin verwendet.

Solche Aminosilane sind beispielsweise unter dem Markennamen DYNASILAN ^{®} der Fa. DEGUSSA bzw. Silquest ^{®} der Fa. OSI verfügbar.

Bevorzugt werden die Verbindungen der allgemeinen Formel (I) und die aminofunktionellen Silane in einem Mengenverhältnis zwischen 9:1 und 1:9 besonders bevorzugt in einem Mengenverhältnis zwischen 5:1 und 1:5, ganz besonders bevorzugt in einem Mengenverhältnis zwischen 3:1 und 1:1 jeweils bezogen auf die Menge der Verbindungen der allgemeinen Formel (I) einerseits und der Menge der aminofunktionellen Silane andererseits, mit den isocyanatgruppenhaltigen Verbindungen (A) umgesetzt.

Bevorzugt ist die Verwendung von Verbindungen (V) basierend auf mindestens einer isocyanatgruppenhaltigen Verbindung (A), in denen 5 bis 95 mol-% der ursprünglich vorhandenen Isocyanatgruppen mit Verbindungen der vorstehend genannten Formel (I) und aminofunktioneller Silane in den oben beschriebenen Verhältnissen umgesetzt sind, als Vernetzungsmittel.

Weiterhin bevorzugt ist die Verwendung von Verbindungen (V), die einen Brechungsindex nD20 ≥ 1.500, besonders bevorzugt einen Brechungsindex nD20 ≥ 1.501, bei einer Temperatur von 20°C aufweisen, als Vernetzungsmittel.

Der Brechungsindex nD20 kann refraktometrisch bei 20°C nach den üblichen, dem Fachmann bekannten Methoden bestimmt werden.

### Die hydroxylgruppenhaltige Verbindung (B)

Prinzipiell können alle hydroxylgruppenhaltigen Verbindungen mit 2 oder mehr als 2 OH-Gruppen als Verbindungen (B) verwendet werden.

Als hydroxylgruppenhaltige Verbindung (B) werden vorzugsweise ein niedermolekulares Polyol, ein oligomeres Polyol, ein polymeres Polyol oder eine Mischung dieser Polyole verwendet.

Als niedermolekulare Polyole werden beispielsweise Diole, wie bevorzugt Ethylenglykol, Neopentylglykol, 1,2-Propandiol, 2,2-Dimethyl-1,3-Propandiol. 1,4-Butandiol, 1,3-Butandiol, 1,5-Pentandiol, 2,2,4-Trimethyl-1,3-Pentandiol, 1,6-Hexandiol, 1,4-Cyclohexandimethanol und 1,2-Cyclohexandimethanol, sowie Polyole mit mehr als 2 OH-Gruppen, wie bevorzugt Trimethylolethan, Trimethylolpropan, Trimethylolhexan, 1,2,4-Butantriol, Pentaerytritol sowie Dipentaerytritol, eingesetzt.

Bevorzugt werden solche niedermolekularen Polyole in untergeordneten Anteilen einer oligo- und/oder polymeren Polyolkomponente (B) beigemischt, sofern die hydroxylgruppenhaltige Verbindung (B) in dieser Form vorliegt.

Die bevorzugt verwendeten oligo- und/oder polymeren Polyole (B) weisen massenmittlere Molekulargewichte Mw > 500 Dalton, gemessen mittels GPC (Gelpermeationschromatographie) unter Verwendung eines Polystyrol-Standards, bevorzugt zwischen 800 und 100.000 Dalton, besonders bevorzugt zwischen 1.000 und 50.000 Dalton auf. Besonders bevorzugt ist die Verwendung von Polyesterpolyolen, Polyurethanpolyolen, Polysiloxanpolyolen und insbesondere Polyacrylatpolyolen und/oder Polymethacrylatpolyolen sowie deren Mischpolymerisate, im folgenden Poly(meth)acrylatpolyole genannt. Die Polyole weisen bevorzugt eine OH-Zahl von 30 bis 400 mg KOH/g, besonders bevorzugt zwischen 100 und 300 KOH/g, auf. Die Glasübergangstemperaturen, gemessen per DSC (Differential-Thermoanalyse), der Polyole liegen bevorzugt zwischen -150 und 100°C, besonders bevorzugt zwischen -120°C und 80°C. Geeignete Polyesterpolyole sind beispielsweise in EP-A-0 994 117 und EP-A-1 273 640 beschrieben. Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben. Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Die erfindungsgemäß ganz besonders bevorzugt verwendeten Poly(meth)acrylatpolyole sind in der Regel Copolymerisate und weisen vorzugsweise massenmittlere Molekulargewichte Mw zwischen 1.000 und 20.000 Dalton, besonders bevorzugt zwischen 1.500 und 10.000 Dalton auf, jeweils gemessen mittels Gelpermeationschromatographie (GPC) gegen einen Polystyrolstandard. Die Glasübergangstemperatur der Copolymerisate liegt in der Regel zwischen -100 und 100°C, insbesondere zwischen -50 und 80°C (gemessen mittels DSC). Die Poly(meth)acrylatpolyole weisen bevorzugt eine OH-Zahl von 60 bis 250 mg KOH/g, besonders bevorzugt zwischen 70 und 200 KOH/g, sowie eine Säurezahl zwischen 0 und 30 mg KOH/g, auf.

Die Hydroxylzahl (OH-Zahl) gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2).

Die Säurezahl gibt hierbei die Anzahl der mg Kaliumhydroxid an, die zur Neutralisation von 1 g der jeweiligen Verbindung der Komponente (B) verbraucht wird (DIN EN ISO 2114).

Als hydroxylgruppenhaltige Monomerbausteine für die Poly(meth)acrylatpolyole werden bevorzugt Hydroxyalkylacrylate und/oder Hydroxyalkylmethacrylate, wie insbesondere 2-Hydroxyethylacrylat, 2-Hydroxyethlymethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat verwendet.

Als weitere Monomerbausteine werden für die Poly(meth)acrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropytmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornymethacrylat oder insbesondere Cyclohexylacrylat und/oder Cyclohexylmethacrylat.

Als weitere Monomerbausteine für die Poly(meth)acrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

### Die Kombination der Komponenten (V) und (B) sowie weitere Komponenten der Beschichtungszusammensetzung

Ein weiterer Gegenstand der vorliegenden Erfindung ist eine Beschichtungszusammensetzung gemäß Anspruch 8.

Bevorzugt ist das mindestens eine Bindemittel eine hydroxylgruppenhaltige Verbindung (B).

Der Gewichtsanteil der einzusetzenden hydroxylgruppenhaltigen Verbindungen (B), bezogen auf den Gewichtsanteil der isocyanatgruppenhaltigen Verbindungen (V) hängt vom Hydroxyäquivalentgewicht der hydroxylgruppenhaltigen Verbindungen (B) und vom Äquivalentgewicht der nicht umgesetzten Isocyanatgruppen des Polyisocyanats (V) ab.

Bezogen auf die Summe der für die Vernetzung in der Beschichtungszusammensetzung maßgeblichen funktionellen Gruppen, gebildet aus den Anteilen der Hydroxyl- und Isocyanatgruppen sowie den Anteilen der Struktureinheiten der Formel (II), sind die Struktureinheiten der Formel (II) bevorzugt in Anteilen von 2,5 bis 97,5 mol-%, besonders bevorzugt zwischen 5 und 95 mol-% und ganz besonders bevorzugt zwischen 10 und 90 mol-% vorhanden.

Bevorzugt wird der Gehalt an Struktureinheiten der Formel (II) maximal so hoch gewählt, dass die erfindungsgemäße Beschichtungszusammensetzung weniger als 6,5 Massen-% Silizium der Struktureinheiten (II), besonders bevorzugt maximal 6,0 Massen-% Silizium der Struktureinheiten (II), jeweils bezogen auf den nichtflüchtigen Anteil der Beschichtungszusammensetzung, enthält.

Die Gewichtsanteile der hydroxylgruppenhaltigen Verbindungen (B) und der isocyanathaltigen Verbindungen (V) werden vorzugsweise solchermaßen gewählt, dass das molare Äquivalentverhältnis den nicht umgesetzten Isocyanatgruppen der isocyanathaltigen Verbindungen (V) zu den Hydroxylgruppen der hydroxylgruppenhaltigen Verbindungen (B) zwischen 0,9 : 1 und 1 : 1,1, bevorzugt zwischen 0,95 : 1 und 1,05 : 1, besonders bevorzugt zwischen 0,98 : 1 und 1,02 : 1, liegt.

Handelt es sich um einkomponentige (1 K) Beschichtungszusammensetzungen, so werden die isocyanatgruppenhaltigen Verbindungen (V) gewählt, deren nicht mit Verbindungen der Formel (I) umgesetzte Isocyanatgruppen mit den oben beschriebenen Blockierungsmitteln blockiert sind.

Bevorzugt handelt es sich um 2-komponentige (2K) Beschichtungszusammensetzungen. Diese 2K-Beschichtungszusammensetzungen bestehen aus einer ersten Komponente, die mindestens eine isocyanatgruppenhaltige Verbindung (V) sowie gegebenenfalls mindestens ein Lösemittel und gegebenenfalls mindestens einen weiteren Bestandteil enthält; und einer zweiten Komponente, die mindestens eine hydroxylgruppenhaltige Verbindung (B) sowie gegebenenfalls mindestens ein Lösemittel und gegebenenfalls mindestens einen weiteren Bestandteil enthält.

Ein weiterer Gegenstand der Erfindung ist die Verwendung einer erfindungsgemäßen Beschichtungszusammensetzung zur Herstellung einer Beschichtung.

Bevorzugt ist die Verwendung einer 2-komponentigen (2K) Beschichtungszusammensetzung zur Herstellung einer Beschichtung. Dabei wird erst kurz vor der Applikation der Beschichtungszusammensetzung die erste Komponente der Beschichtungszusammensetzung, enthaltend mindestens eine isocyanatgruppenhaltige Verbindung (V) sowie gegebenenfalls mindestens ein Lösemittel und gegebenenfalls mindestens einen weiteren Bestandteil, mit der zweiten Komponente der Beschichtungszusammensetzung, enthaltend mindestens eine hydroxylgruppenhaltige Verbindung (B) sowie gegebenenfalls mindestens ein Lösemittel und gegebenenfalls mindestens einen weiteren Bestandteil, sowie gegebenenfalls weiteren Bestandteilen in an sich bekannter Weise vermischt, wobei in der Regel die zweite Komponente des Beschichtungssystems, welche die Verbindung (B) enthält, einen Katalysator sowie einen Teil des Lösemittels enthält.

Als Katalysatoren für die Vernetzung der Alkoxysilyl-Einheiten sowie für die Reaktion zwischen den Hydroxylgruppen der Verbindung (B) und den nicht mit einer Verbindung der Formel (I) umgesetzten Isocyanatgruppen der Verbindung (V) können an sich bekannte Verbindungen eingesetzt werden. Beispiele sind LewisSäuren (Elektronenmangelverbindungen), wie beispielsweise Zinnnaphtenat, Zinnbenzoat, Zinnnoctoat, Zinnbutryrat, Dibutylzinndilaurat, Dibutylzinndiacetat, Dibutylzinnoxid, Bleioctoat, sowie Katalysatoren wie in WO-A-2006/042585 beschrieben. Als Katalysatoren für die Vernetzung der Alkoxysilyl-Einheiten werden bevorzugt Aminaddukte der Phosphorsäure oder der Sulfonsäure eingesetzt (z.B. Nacure-Typen der Fa. King Industries), besonders bevorzugt aminblockierte Phosphorsäuren.

Als Katalysator werden besonders bevorzugt phosphorhaltige, besonders bevorzugt phosphor- und stickstoffhaltige Katalysatoren eingesetzt. Dabei können auch Mischungen aus zwei oder mehreren verschiedenen Katalysatoren eingesetzt werden.

Beispiele für geeignete phosphorhaltige Katalysatoren sind substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern. Derartige Katalysatoren sind beispielsweise in der deutschen Patentanmeldung DE-A-102005045228 beschrieben.

Ganz besonders bevorzugt werden aber substituierte Phosphorsäuremonoester und Phosphorsäurediester, vorzugsweise aus der Gruppe, bestehend aus acyclischen Phosphorsäurediestem und cyclischen Phosphorsäurediestern, besonders bevorzugt Aminaddukte der Phosphorsäuremono- und -diester verwendet. Insbesondere werden die entsprechenden aminblockierten Phosphorsäureester, und hier bevorzugt aminblockierte Phosphorsäureethylhexylester und aminblockierte Phosphorsäurephenylester, ganz besonders bevorzugt amin-blockierter Phosphorsäure-bis(2-ethylhexyl)ester verwendet.

Die Katalysatoren werden vorzugsweise in Anteilen von 0,01 bis 20 Gew.-%, besonders bevorzugt in Anteilen von 0,1 bis 10 Gew.-%, bezogen auf die nicht flüchtigen Bestandteile der gesamten Beschichtungszusammensetzung, eingesetzt. Eine geringere Wirksamkeit des Katalysators kann dabei durch entsprechend höhere Einsatzmengen teilweise kompensiert werden.

Neben einer aminblockierten Phosphorsäure kann die verwendete Beschichtungszusammensetzung als weiteren Katalysator ein ungesättigtes dicyclisches Amin enthalten. Vorzugsweise ist dieses Amin 1,5-Diazabicyclo[4.3.0]non-5-en oder 1,8-Diazabicyclo[5.4.0]undec-7-en. Das Amin wird vorzugsweise in Anteilen von 0,01 bis 20 Gew.-%, besonders bevorzugt in Anteilen von 0,1 bis 10 Gew.-%, bezogen auf die nichtflüchtigen Bestandteile der gesamten Beschichtungszusammensetzung verwendet. Dabei hat auch die eingesetzte Menge des Katalysators einen gewissen Einfluss auf die Vernetzung. Eine geringe Wirksamkeit des Katalysators kann durch entsprechend höhere Einsatzmengen teilweise kompensiert werden.

Als Lösemittel für die Beschichtungszusammensetzungen sind insbesondere solche geeignet, die in der Beschichtungszusammensetzung chemisch inert gegenüber den Verbindungen (B) und (V) sind und die auch bei der Härtung des Beschichtungsmittels nicht mit (B) oder (V) reagieren. Beispiele für solche Lösemittel sind aliphatische und/oder aromatische Kohlenwasserstoffe wie Toluol, Xylol, Solventnaphtha, Solvesso 100 oder Hydrosol^{®} (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel auf.

Neben den Verbindungen (B) und (V) können noch weitere Bindemittel (C) zur Herstellung einer Beschichtungszusammensetzung eingesetzt werden, welche vorzugsweise mit den Hydroxylgruppen der Verbindungen (B) und/oder mit den nicht umgesetzten Isocyanatgruppen der Verbindungen (V) und/oder Alkoxysilylgruppen der Verbindungen (V) reagieren und Netzwerkpunkte ausbilden können.

Beispielsweise sind als Komponente (C) Aminoplastharze und/oder Epoxyharze verwendbar. Es kommen die üblichen und bekannten Aminoplastharze in Betracht, deren Methylol- und/oder Methoxymethylgruppen teilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter" Carbamylmethylated Melanimes, Novel Crosslinkers for the Coatings Industry" in Advanced Organic Coatings Science and Technology Series, 1991, Band 13, Seiten 193 bis 207, beschrieben.

In der Regel werden solche Komponenten (C) in Anteilen von bis zu 40 Gew.-%, bevorzugt von bis zu 30 Gew.-%, besonders bevorzugt von bis zu 25 Gew.-%, bezogen auf die nichtflüchtigen Bestandteile der gesamten Beschichtungszusammensetzung, eingesetzt.

Darüber hinaus kann die verwendete Beschichtungszusammensetzung mindestens ein übliches und bekanntes Lackadditiv in wirksamen Mengen, d.h. in Mengen vorzugsweise bis zu 30 Gew.-%, besonders bevorzugt bis zu 25 Gew.-% und ganz besonders bevorzugt bis zu 20 Gew.-%, jeweils bezogen auf die nichtflüchtigen Bestandteile der gesamten Beschichtungszusammensetzung, enthalten.

Beispiele geeigneter Lackadditive sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- Reaktiwerdünner, wie sie aus dem Stand der Technik allgemein bekannt sind, welche bevorzugt inert gegenüber den -Si(OR)₃-Gruppen sind.
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- Filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon "Lacke und Druckfarben" Georg Thieme Verlag, Stuttgart, 1998, Seiten 250 bis 252, verwiesen;
- Rheologiesteuernde Additive wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymer und ihre Derivate oder hydrophob modifizierte ethoxylierte Urethane oder Polyacrylate;
- und/oder Flammschutzmittel.

In einer weiteren Ausführungsform der Erfindung kann die Beschichtungszusammensetzung noch weitere Pigmente und/oder Füllstoffe enthalten und zur Herstellung pigmentierter Topcoats dienen. Die dafür eingesetzten Pigmente und/oder Füllstoffe sind dem Fachmann bekannt.

Die Beschichtungszusammensetzungen eignen sich für alle Einsatzgebiete, in denen Beschichtungszusammensetzungen mit hohen Anforderungen an die Säurefestigkeit, Glätte und Kratzfestigkeit der Beschichtung Verwendung finden, z. B. Lackierung und Versiegelung von Holz und Holzwerkstoffen, Beschichtung metallischer Oberflächen und Lackierung und Versiegelung diverser Kunststoffoberflächen.

Eine bevorzugte Verwendung der Beschichtungszusammensetzungen betrifft alle Einsatzgebiete, in denen hohe Anforderungen an den Glanz der Beschichtung gestellt werden, z. B. in der Automobilserien(OEM)lackierung.

Da die aus den vorstehend definierten Beschichtungszusammensetzungen hergestellten Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung oder die modulare Kratzfestausrüstung von bereits lackierten Automobilkarosserien.

Die Applikation der Beschichtungszusammensetzung kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten Beschichtungszusammensetzung kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die Härtung der applizierten Beschichtungszusammensetzung kann beispielsweise thermisch erfolgen. Die thermische Härtung der applizierten Beschichtungszusammensetzung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 30 bis 200°C, besonders bevorzugt 40 bis 190°C und ganz besonders bevorzugt 50 bis 180°C während einer Zeit von 1 min bis zu 10 h, besonders bevorzugt 2 min bis zu 5 h und ganz besonders bevorzugt 3 min bis 3 h, wobei bei den für die Automobilreparaturlackierung angewandten Temperaturen, die bevorzugt zwischen 30 und 90°C liegen, auch längere Härtzeiten zur Anwendung kommen können.

Die Beschichtungszusammensetzungen liefern gehärtete Beschichtungen, insbesondere Lackierungen, speziell Klarlackierungen, Formteile, speziell optische Formteile, und freitragende Folien, die hoch kratzfest und insbesondere chemikalien-und witterungsstabil sind. Insbesondere lassen sich die Beschichtungen und Lackierungen, speziell die Klarlackierungen, auch in Schichtdicken >40 µm herstellen, ohne dass Spannungsrisse auftreten.

Die wie vorstehend definierten Beschichtungszusammensetzungen eignen sich daher hervorragend zur Herstellung von dekorativen, schützenden und/oder effektgebenden, hoch kratzfesten Beschichtungen und Lackierungen von Karosserien von Fortbewegungsmitteln (insbesondere Kraftfahrzeuge, wie Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanischen Bauteilen sowie von Glashohlkörpern und Gegenständen des täglichen Bedarfs.

Insbesondere werden die Beschichtungszusammensetzungen zur Herstellung von Beschichtungen und Lackierungen, insbesondere von Klarlackierungen, in dem technologisch und ästhetisch besonders anspruchsvollen Gebiet der Automobilserienlackierung (OEM) sowie der Automobilreparaturlackierung eingesetzt. Besonders bevorzugt werden die Beschichtungszusammensetzungen in einer Stufe von mehrstufigen Beschichtungsverfahren eingesetzt, insbesondere bei mehrstufigen Beschichtungsverfahren, bei denen auf ein gegebenenfalls vorbeschichtetes Substrat zunächst eine pigmentierte Basislackschicht und danach eine Schicht mit der wie vorstehend definierten Beschichtungszusammensetzung aufgetragen werden.

Daher werden die Beschichtungszusammensetzungen in der Klarlackschicht (oberste Schicht) von Mehrschichtaufbauten eingesetzt.

Zur Herstellung der darunterliegenden Basislackschicht können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff., angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird die wie vorstehend definierte Beschichtungszusammensetzung aufgebracht. Anschließend wird die Zweischichtlackierung bevorzugt unter bei der Automobilserienlackierung angewandten Bedingungen bei Temperaturen von 30 bis 200°C, besonders bevorzugt 40 bis 190°C und ganz besonders bevorzugt 50 bis 180°C, während einer Zeit von 1 min bis 10 h, besonders bevorzugt 2 min bis zu 5 h und ganz besonders bevorzugt 3 min bis 3 h, gehärtet, wobei bei den für die Automobilreparaturlackierung angewandten Temperaturen, die bevorzugt zwischen 30 und 90°C liegen, auch längere Härtzeiten zur Anwendung kommen können. Die mit den wie vorstehend definierten Beschichtungszusammensetzungen erzeugten Schichten zeichnen sich vor allem durch eine besonders hohe Chemikalien- und Witterungsbeständigkeit sowie eine sehr gute Waschstraßenbeständigkeit und Kratzfestigkeit aus, insbesondere durch eine herausragende Kombination von Kratzfestigkeit und Witterungsstabilität gegen UV-Strahlung im Feucht-Trockenzyklus.

In einer weiteren bevorzugten Ausführungsform der Erfindung wird die Beschichtungszusammensetzung als transparenter Klarlack zur Beschichtung von Kunststoffsubstraten, insbesondere von transparenten Kunststoffsubstraten, eingesetzt. In diesem Fall beinhaltet die Beschichtungszusammensetzung UV-Absorber, die in Menge und Art auch auf den wirksamen UV-Schutz des Kunststoffsubstrates ausgelegt sind. Auch hier zeichnen sich die aus den Beschichtungszusammensetzungen erhaltenen Beschichtungen durch eine herausragende Kombination von Kratzfestigkeit und Witterungsstabilität gegen UV-Strahlung im Feucht-Trockenzyklus aus. Die solchermaßen beschichteten Kunststoffsubstrate werden vorzugsweise für den Ersatz von Glaskomponenten im Automobilbau eingesetzt, wobei die Kunststoffsubstrate bevorzugt aus Polymethylmethacrylat oder Polycarbonat bestehen.

Der Glanz der aus den wie vorstehend definierten Beschichtungszusammensetzungen erhaltenen Beschichtungen kann mit Hilfe der dem Fachmann bekannten Methoden gemessen werden, beispielsweise unter einem Beobachtungswinkel von 20° oder 60° mit einem Glanzmeßgerät der Firma Byk Gardner.

Die wie vorstehend definierte Beschichtungszusammensetzung führt nach der Applikation und Härtung bevorzugt zu einem Lack mit einem Glanzwert ≥ 87,0, besonders bevorzugt mit einem Glanzwert ≥ 88,0, unter einem Beobachtungswinkel von 20°.

Die wie vorstehend definierte Beschichtungszusammensetzung führt nach der Applikation und Härtung bevorzugt zu einem Lack mit einem Glanzwert ≥ 90,0, besonders bevorzugt mit einem Glanzwert ≥ 91,0, unter einem Beobachtungswinkel von 60°, gemessen nach DIN EN ISO 2813 DE.

### Beispiele

### 1.) Herstellbeispiele für teilsilanisierte Vernetzungsmittel

### Herstellbeispiel 1 - Herstellung eines zu 60 mol-% mit Mercaptopropyltrimethoxysilan umgesetzten trimeren Isocyanats (HDI)

In einem Dreihalskolben aus Glas, ausgerüstet mit einem Rückflußkühler, einem Thermometer und einem Zulauf, werden 38,9 Gewichtsteile Basonat HI 100 (HDI, ^{®} BASF), 36,93 Gewichtsteile Hydrosol A 170 (^{®} Aral) und 0,22 Gewichtsteile Dibutylzinndilaurat (^{®} Merck) vorgelegt. Anschließend einen Zulauf, bestehend aus 23,96 Gewichtsteilen 3-Mercaptopropyltrimethoxysilan (kommerziell erhältlich als Dynasylan MTMO der Fa. Evonik) über 45 Minuten so dosiert zugeben, dass die Temperatur durch die entstehende Exothermie 60°C nicht überschreitet.

Das auf diese Weise erhaltene Gemisch wurde noch 3 Stunden bei einer Temperatur von 60°C gerührt, bis mittels einer titrimetrischen NCO-Wert-Bestimmung ein Restgehalt an freien NCO-Gruppen von 3,42 Gew.-% bezogen auf die Lösung (5,45 Gew.-% bezogen auf den nichtflüchtigen Anteil) ermittelt wurde.

### Vergleichsbeispiel 1 - Herstellung eines zu 60 mol-% mit N-[3-(Trimethoxysilyl)-propyl]butylamin umgesetzten trimeren Isocyanats (HDI)

In einem Dreihalskolben aus Glas, ausgerüstet mit einem Rückflußkühler, einem Thermometer und einem Zulauf, werden 36,23 Gewichtsteile Basonat HI 100 (HDI, ^{®} BASF), 36,99 Gewichtsteile Hydrosol A 170 (^{®} Aral) und vorgelegt. Anschließend einen Zulauf, bestehend aus 26,79 Gewichtsteilen N-[3-(trimethoxysilyl)-propyl]butylamin (kommerziell erhältlich als Dynasylan 1189 der Fa. Evonik) über 45 Minuten so dosiert zugegeben, dass die Temperatur durch die entstehende Exothermie 60°C nicht überschreitet.

Das auf diese Weise erhaltene Gemisch wurde noch 3 Stunden bei einer Temperatur von 60°C gerührt, bis mittels einer titrimetrischen NCO-Wert-Bestimmung ein Restgehalt an freien NCO-Gruppen von 3,19 Gew.-% bezogen auf die Lösung (5,06 Gew.-% bezogen auf den nichtflüchtigen Anteil) ermittelt wurde.

### Herstellbeispiel 2 - Herstellung eines 60 mol-% mit 3-Mercaptopropyltrimethoxysilan und Bis[3-(trimethoxysilyl)-propyl]amin im Verhältnis 70:30 umgesetzten trimeren Isocyanats (HDI)

In einem Dreihalskolben aus Glas, ausgerüstet mit einem Rückflußkühler, einem Thermometer und einem Zulauf, werden 35,94 Gewichtsanteile Basonat HI 100 (HDI, ^{®} BASF), 37,00 Gewichtsteile Hydrosol A 170 (^{®} Aral) vorgelegt. Anschließend einen Zulauf, bestehend aus 15,49 Gewichtsteilen 3-Mercaptopropyltrimethoxysilan (kommerziell erhältlich als Dynasylan MTMO der Fa. Evonik) und 11,56 Gewichtsteilen Bis-[3-(trimethoxysilyl)-propyl]amin (kommerziell erhältlich als Dynasylan 1124 der Fa. Evonik über 45 so dosiert zugeben, dass die Temperatur durch die entstehende Exothermie 60°C nicht überschreitet.

Das auf diese Weise erhaltene Gemisch wurde noch 3 Stunden bei einer Temperatur von 60°C gerührt, bis mittels einer titrimetrischen NCO-Wert-Bestimmung ein Restgehalt an freien NCO-Gruppen Lsg. von 3,16 Gew.-% bezogen auf die Lösung (5,02 Gew.-% bezogen auf den nichtflüchtigen Anteil) ermittelt wurde.

### Vergleichsbeispiel 2 - Herstellung eines zu 60% mit N-[3-(Trimethoxysilyl)-propyl]butylamin und Bis[3-(trimethoxysilyl)-propyl]amin im Verhältnis zu 70:30 umgesetzten trimeren Isocyanats (HDI)

In einem Dreihalskolben aus Glas, ausgerüstet mit einem Rückflußkühler, einem Thermometer und einem Zulauf, werden 34,23 Gewichtsteile Basonat HI 100 (HDI, ^{®} BASF), 37,04 Gewichtsteile Hydorosol A 170 (^{®} Aral) vorgelegt. Anschließend einen Zulauf, bestehend aus 17,72 Gewichtsteilen N-[3-(Trimethoxysilyl)-propyl]butylamin (kommerziell erhältlich als Dynasylan 1189 der Fa. Evonik) und 11,02 Gewichtsteilen Bis-[3-(trimethoxysilyl)-propyl]amin (kommerziell erhältlich als Dynasylan 1124 der Fa. Evonik) über 45 Minuten so dosiert zugeben, dass die Temperatur durch die entstehende Exothermie 60°C nicht überschreitet.

Das auf diese Weise erhaltene Gemisch wurde noch 3 Stunden bei einer Temperatur von 60°C gerührt, bis mittels einer titrimetrischen NCO- Wert- Bestimmung ein Restgehalt an freien NCO- Gruppen Lsg. von 3,01 Gew.-% bezogen auf die Lösung (4,78 Gew.-% bezogen auf den nichtflüchtigen Anteil) ermittelt wurde.

### 2.) Nerstellbeispiel 3 eines zur Beschichtung verwendbaren Polvols:

In einem Stahlkessel ausgestattet mit Monomerenzulauf, Initiatorzulauf, Thermometer, Ölheizung und Rückflusskühler werden 29,08 Gewichtsteile eines handelsüblichen aromatischen Lösemittelgemischs (Solventnaphtha ^{®} der Fa. DHC Solvent Chemie GmbH) auf 140 °C aufgeheizt. Dann wird eine Mischung a1 aus 3,39 Gewichtsteilen Solventnaphtha und 2,24 Gewichtsteilen tert.-Butylperoxy-2-ethylhexanoat in einer solchen Geschwindigkeit unter Rühren zugegeben, dass die Zugabe der Mischung a1 nach 6,75 h abgeschlossen ist. 15 min nach Beginn der Zugabe der Mischung a1 wird eine Mischung a2 bestehend aus 4,97 Gewichtsteilen Styrol, 16,91 Gewichtsteilen tert.-Butylacrylat, 19,89 Gewichtsteilen 2-Hydroxypropylmethacrylat, 7,45 Gewichtsteilen n-Butylmethacrylat sowie 0,58 Gewichtsteilen Acrylsäure in einer solchen Geschwindigkeit zugegeben, dass die Zugabe der Mischung a2 nach 6 h abgeschlossen ist. Nach Zugabe der Mischung a1 wird das Reaktionsgemisch noch 2 h auf 140 °C gehalten und anschließend auf unter 100 °C abgekühlt. Anschließend wird die Reaktionsmischung noch mit einem Gemisch a3 aus 3,70 Gewichtsteilen 1-Methoxypropylacetat-2, 3,06 Gewichtsteilen Butylglykolacetat und 6,36 Gewichtsteilen Butylacetat 98/100 verdünnt.

Die erhaltene Lösung des Polyacrylatpolyols A weist einen Feststoffgehalt von 52,4% (1h, 130 °C, Umluftofen), eine Viskosität von 3,6 dPas (ICI-Platte-Kegel-Viskosimeter, 23 °C), eine Hydroxylzahl von 155 mg KOH/g und eine Säurezahl von 10-13 mg KOH/g auf.

### 3.) Brechungsindexwerte der Vernetzungsmittel

| | **Vernetzungsmittel nach Herstellbsp.1** | **Vernetzungsmittel nach Vgl 1** | **Vernetzungsmittel nach Herstellbsp.2** | **Vernetzungsmittel nach Vgl 2** |
|---|---|---|---|---|
| **nD20** | 1,507 | 1,497 | 1,502 | 1,496 |

Die Vernetzungsmittel aus den Herstellbeispielen 1 und 2 weisen einen höheren Brechungsindex auf als entsprechende Vernetzungsmittel aus den Vergleichsbeispielen 1 und 2, die keine Polyisocyanate mit Thiourethangruppen enthalten. Die Brechungsindices wurden bei 20°C mit einem Refraktometer NAR-3T der Firma ATAGO bestimmt.

### 4.) Formulierungsbeispiele der Härter für Beschichtungszusammensetzungen A-D

| | **a** | **b** | **c** | **d** |
|---|---|---|---|---|
| Vernetzungsmittel (nach Herstellbeispiel **1**) | 80,5 | - | - | - |
| Vernetzungsmittel (nach Vergleichsbeispiel **1**) | - | 86,3 | - | - |
| Vernetzungsmittel (nach Herstellbeispiel **2**) | - | - | 87,1 | - |
| Vernetzungsmittel (nach Vergleichsbeispiel **2**) | - | - | - | 91,5 |
| Katalysator (Nacure 4167; Phosphorsäuredialkylester neutralisiert mit einem organischen Amin) | 4,4 | 4,7 | 4,8 | 5,0 |
| BYK 301 (Lösung eines polyethermodifizierten Polydimethylsiloxans) | 0,2 | 0,2 | 0,2 | 0,2 |
| Tinuvin 384 (Lichtschutzmittel) | 0,9 | 0,9 | 0,9 | 0,9 |
| Tinuvin 292 (Lichtschutzmittel) | 0,8 | 0,8 | 0,8 | 0,8 |
| Polyol (nach Herstellbeispiel 3) | 45 | 45 | 45 | 45 |
| Lösemittel (Solventnaphtha) | 20 | 20 | 20 | 20 |

### 5.) Herstellung der Beschichtungszusammensetzungen a - d

Aus den Vernetungsmitteln (Beispiele 1 und 2, Vergleichsbeispiele 1 und 2 gemäß obenstehender Tabelle) wurden die Beschichtungszusammensetzungen a - d folgendermaßen formuliert:
Die Komponente 1, enthaltend Komponente A (Polyol) und die oben genannten handelsüblichen Additive und Katalysator und Lösungsmittel, wird kurz vor der Applikation mit Komponente 2, enthaltend Komponente B (Vernetzungsmittel nach Beispiel 1 und 2 bzw. Vergleichsbeispiel 1 und 2), vereinigt und solange innig verrührt bis eine homogene Mischung entsteht.

### 6.) Herstellung von Beschichtungen A - D aus den Beschichtungszusammensetzungen a - d

Aus den Beschichtungszusammensetzungen a - d wurden wie folgt die Beschichtungen A - D hergestellt. Die Beschichtungszusammensetzungen wurden in einer Auftrags-Schichtdicke von 40 µm auf Bonderblechen aufgebracht, die mit einem üblichen schwarzen Wasserbasislack versehen waren. Die 15 µm dicke Wasserbasislackschicht ist hierbei bereits gehärtet.

Die Applikation erfolgt pneumatisch bei 2,5 bar in drei Spritzgängen.

Danach wird die Beschichtung 5 Minuten bei Raumtemperatur abgelüftet und anschließend bei 140°C 22 Minuten eingebrannt.

### 7.) Glanzwerte für die erhaltenen Beschichtungen A - D

Glanzwerte für die erhaltenen Beschichtungen A - D wurden nach **DIN EN ISO 2813 DE** bestimmt mit einem Glanzmessgerät der Fa. Byk Gardner unter Beobachtungswinkeln von 20° und 60°.

| Beobachtungswinkel | **a** | **b** | **c** | **d** |
|---|---|---|---|---|
| **20°** | 89,3 | 85,1 | 88,5 | 86,9 |
| **60°** | 93,0 | 89,3 | 91,4 | 90,7 |

## Patentansprüche

1. Verwendung einer Verbindung (V), basierend auf mindestens einer isocyanathaltigen Verbindung (A) mit einer mittleren NCO-Funktionalität von 2,0 bis 6,0, **dadurch gekennzeichnet, dass** 0,1 bis 99 mol-% der ursprünglich vorhandenen Isocyanatgruppen der isocyanathaltigen Verbindung (A) mit mindestens einer Verbindung der allgemeinen Formel (I), 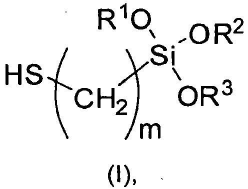 umgesetzt sind,
wobei
m gleich 2, 3 oder 4 ist;
und
R¹, R² und R³, unabhängig voneinander, jeweils für H, unsubstituiertes oder wenigstens einfach substituiertes Alkyl oder unsubstituiertes oder wenigstens einfach substituiertes Heteroalkyl stehen,
als Vernetzungsmittel in einem Klarlack als oberste Schicht für die Automobillackierung.

2. Verwendung nach Anspruch 1, **dadurch gekennzeichnet, dass** 5 bis 95 mol-%, bevorzugt 10 bis 90 mol-%, besonders bevorzugt 20 bis 80 mol-%, ganz besonders bevorzugt 30 bis 70 mol-% der ursprünglich vorhandenen Isocyanatgruppen der isocyanathaltigen Verbindung (A) mit mindestens einer Verbindung der allgemeinen Formel (I) umgesetzt sind.

3. Verwendung nach Anspruch 1 oder 2, **dadurch gekennzeichnet, dass**
m gleich 2, 3 oder 4 ist;
und
R¹, R² und R³, unabhängig voneinander, jeweils für H, unsubstituiertes C₁-₁₂-Alkyl oder unsubstituiertes 2- bis 12-gliedriges Heteroalkyl stehen.

4. Verwendung nach einem oder mehreren der Ansprüche 1 bis 3,
**dadurch gekennzeichnet, dass**
m gleich 3 ist;
und
R¹, R² und R³, unabhängig voneinander, jeweils für H, Methyl, Ethyl, n-Propyl, Isopropyl, n-Butyl, Isobutyl, 2-Butyl, tert-Butyl, n-Pentyl, 2-Pentyl, iso-Pentyl oder neo-Pentyl stehen.

5. Verwendung nach einem oder mehreren der Ansprüche 1 bis 4,
**dadurch gekennzeichnet, dass**
m gleich 3 ist;
und R¹, R² und R³, unabhängig voneinander, jeweils für Ethyl oder Methyl stehen.

6. Verwendung nach einem oder mehreren der Ansprüche 1 bis 5, **dadurch gekennzeichnet, dass** die isocyanathaltige Verbindung (A) ein durch Trimerisierung, Dimerisierung, Urethan-, Biuret- oder Allophanatbildung von einem Polyisocyanat abgeleitetes Polyisocyanat ist.

7. Verwendung nach Anspruch 6, **dadurch gekennzeichnet, dass** das abgeleitete Polyisocyanat auf einem Grundkörper ausgewählt aus der Gruppe bestehend aus Hexamethylendiisocyanat, Isophorondiisocyanat und (4,4')-Methylendicyclohexyldiisocyanat basiert.

8. Beschichtungszusammensetzung enthaltend mindestens ein Bindemittel und mindestens ein Lösemittel, **dadurch gekennzeichnet, dass** die Beschichtungszusammensetzung ein Klarlack ist und dass mindestens eine Verbindung (V), basierend auf mindestens einer isocyanathaltigen Verbindung (A) mit einer mittleren NCO-Funktionalität von 2,0 bis 6,0, wobei 0,1 bis 99 mol-% der ursprünglich vorhandenen Isocyanatgruppen der isocyanathaltigen Verbindung (A) mit mindestens einer Verbindung der allgemeinen Formel (I), 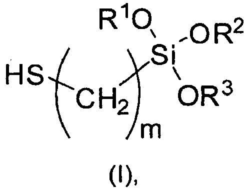 umgesetzt sind,
wobei
m gleich 2, 3 oder 4 ist;
und
R¹, R² und R³, unabhängig voneinander, jeweils für H, unsubstituiertes oder wenigstens einfach substituiertes Alkyl oder unsubstituiertes oder wenigstens einfach substituiertes Heteroalkyl stehen,
als Vernetzungsmittel, und
als Katalysator für die Härtung der Beschichtungszusammensetzung zwischen 0,1 und 20 Gew.-%, bezogen auf die nichtflüchtigen Bestandteile der Beschichtungszusammensetzung, einer aminblockierten Phosphorsäure enthalten sind.

9. Beschichtungszusammensetzung nach Anspruch 8, **dadurch gekennzeichnet, dass** die als Vernetzungsmittel eingesetzte Verbindung (V) wie in einem der vorhergehenden Ansprüche 2 bis 7 definiert ist.

10. Beschichtungszusammensetzung nach einem der Ansprüche 8 oder 9, **dadurch gekennzeichnet, dass** mindestens ein Bindemittel eine hydroxylgruppenhaltige Verbindung (B) ist.

11. Beschichtungszusammensetzung nach Anspruch 10, **dadurch gekennzeichnet, dass** die hydroxylgruppenhaltige Verbindung (B) ein niedermolekulares Polyol, ein oligomeres Polyol, ein polymeres Polyol oder eine Mischung dieser Polyole ist.

12. Beschichtungszusammensetzung nach Anspruch 11, **dadurch gekennzeichnet, dass** das polymere Polyol ein Poly(meth)acrylatpolyol ist.

13. Verwendung einer Beschichtungszusammensetzung nach einem der Ansprüche 8 bis 12 zur Herstellung einer Beschichtung.

## Claims

1. Use of a compound (V) based on at least one isocyanate compound (A) having an average NCO functionality of 2.0 to 6.0, **characterized in that** 0.1 to 99 mol% of the isocyanate groups originally present in the isocyanate compound (A) have been reacted with at least one compound of the general formula (I) 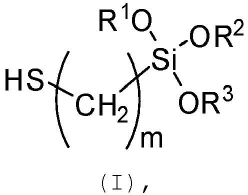 where
m is 2, 3 or 4;
and
R¹, R², and R³, independently of one another, are each H, unsubstituted or at least monosubstituted alkyl or unsubstituted or at least monosubstituted heteroalkyl,
as a crosslinking agent in a clearcoat material as topmost coat for automotive finishing.

2. Use according to Claim 1, **characterized in that** 5 to 95 mol%, preferably 10 to 90 mol%, more preferably 20 to 80 mol%, very preferably 30 to 70 mol% of the isocyanate groups originally present in the isocyanate compound (A) have been reacted with at least one compound of the general formula (I) .

3. Use according to Claim 1 or 2, **characterized in that**
m is 2, 3 or 4;
and
R¹, R², and R³, independently of one another, are each H, unsubstituted C₁₋₁₂ alkyl or unsubstituted 2- to 12-membered heteroalkyl.

4. Use according to one or more of Claims 1 to 3, **characterized in that**
m is 3;
and
R¹, R², and R³, independently of one another, are each H, methyl, ethyl, n-propyl, isopropyl, n-butyl, isobutyl, 2-butyl, tert-butyl, n-pentyl, 2-pentyl, iso-pentyl or neopentyl.

5. Use according to one or more of Claims 1 to 4, **characterized in that**
m is 3;
and R¹, R², and R³, independently of one another, are each ethyl or methyl.

6. Use according to one or more of Claims 1 to 5, **characterized in that** the isocyanate compound (A) is a polyisocyanate derived from a polyisocyanate by trimerization, dimerization, urethanization, biuretization or allophanatization.

7. Use according to Claim 6, **characterized in that** the derived polyisocyanate is based on a parent structure selected from the group consisting of hexamethylene diisocyanate, isophorone diisocyanate, and (4,4')-methylenedicyclohexyl diisocyanate.

8. Coating composition comprising at least one binder and at least one solvent, **characterized in that** the coating composition is a clearcoat material and **in that** at least one compound (V) based on at least one isocyanate compound (A) having an average NCO functionality of 2.0 to 6.0, 0.1 to 99 mol% of the isocyanate groups originally present in the isocyanate compound (A) having been reacted with at least one compound of the general formula (I) 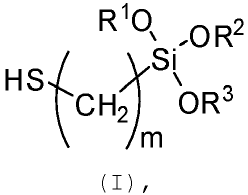 where
m is 2, 3 or 4;
and
R¹, R², and R³, independently of one another, are each H, unsubstituted or at least monosubstituted alkyl or unsubstituted or at least monosubstituted heteroalkyl,
is present as a crosslinking agent, and,
as catalyst for curing the coating composition, between 0.1% and 20% by weight, based on the nonvolatile constituents of the coating composition, of an amine-blocked phosphoric acid are present.

9. Coating composition according to Claim 8, **characterized in that** the compound (V) used as crosslinking agent is defined as in any one of preceding Claims 2 to 7.

10. Coating composition according to either of Claims 8 and 9, **characterized in that** at least one binder is a hydroxyl compound (B).

11. Coating composition according to Claim 10, **characterized in that** the hydroxyl compound (B) is a low molecular mass polyol, an oligomeric polyol, a polymeric polyol or a mixture of these polyols.

12. Coating composition according to Claim 11, **characterized in that** the polymeric polyol is a poly(meth)acrylate polyol.

13. Use of a coating composition according to any one of Claims 8 to 12 to produce a coating.

## Revendications

1. Utilisation d'un composé (V), à base d'au moins un composé (A) contenant des groupes isocyanate, ayant une fonctionnalité NCO moyenne de 2,0 à 6,0, **caractérisée en ce que** 0,1 à 99 % en moles des groupes isocyanate initialement présents du composé (A) contenant des groupes isocyanate sont mis en réaction avec au moins un composé de formule générale (I), 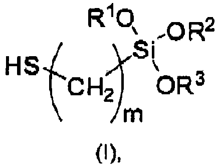 où
m est égal à 2, 3 ou 4 ;
et
R¹, R² et R³, chacun indépendamment, représentent H, un groupe alkyle non substitué ou au moins une fois substitué ou un groupe hétéroalkyle non substitué ou au moins une fois substitué,
en tant qu'agent de réticulation dans un vernis transparent en tant que couche supérieure pour la peinture automobile.

2. Utilisation selon la revendication 1, **caractérisée en ce que** 5 à 95 % en moles, de préférence 10 à 90 % en moles, de façon particulièrement préférée 20 à 80 % en moles, de façon tout particulièrement préférée 30 à 70 % en moles des groupes isocyanate initialement présents du composé (A) contenant des groupes isocyanate sont mis en réaction avec au moins un composé de formule générale (I).

3. Utilisation selon la revendication 1 ou 2, **caractérisée en ce que**
m est égal à 2, 3 ou 4 ;
et
R¹, R² et R³, chacun indépendamment, représentent H, un groupe alkyle en C₁-C₁₂ non substitué ou un groupe hétéroalkyle à 2-12 chaînons non substitué.

4. Utilisation selon une ou plusieurs des revendications 1 à 3,
**caractérisée en ce que**
m est égal à 3 ;
et
R¹, R² et R³, chacun indépendamment, représentent H, le groupe méthyle, éthyle, n-propyle, isopropyle, n-butyle, isobutyle, 2-butyle, tert-butyle, n-pentyle, 2-pentyle, isopentyle ou néopentyle.

5. Utilisation selon une ou plusieurs des revendications 1 à 4,
**caractérisée en ce que**
m est égal à 3 ;
et
R¹, R² et R³, chacun indépendamment, représentent le groupe éthyle ou méthyle.

6. Utilisation selon une ou plusieurs des revendications 1 à 5, **caractérisée en ce que** le composé (A) contenant des groupes isocyanate est un polyisocyanate dérivé par trimérisation, dimérisation, formation d'uréthane, de biuret ou d'allophanate d'un polyisocyanate.

7. Utilisation selon la revendication 6, **caractérisée en ce que** le polyisocyanate dérivé est à base d'un corps de base choisi dans le groupe constitué par l'hexaméthylènediisocyanate, l'isophoronediisocyanate et le (4,4')-méthylènedicyclohexyldiisocyanate.

8. Composition de revêtement contenant au moins un liant et au moins un solvant, **caractérisée en ce que** la composition de revêtement est un vernis transparent et **en ce que** sont contenus au moins un composé (V), à base d'au moins un composé (A) contenant des groupes isocyanate, ayant une fonctionnalité NCO moyenne de 2,0 à 6,0, 0,1 à 99 % en moles des groupes isocyanate initialement présents du composé (A) contenant des groupes isocyanate étant mis en réaction avec au moins un composé de formule générale (I), 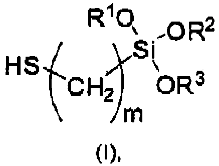 où
m est égal à 2, 3 ou 4 ;
et
R¹, R² et R³, chacun indépendamment, représentent H, un groupe alkyle non substitué ou au moins une fois substitué ou un groupe hétéroalkyle non substitué ou au moins une fois substitué,
en tant qu'agent de réticulation, et
en tant que catalyseur pour le durcissement de la composition de revêtement entre 0,1 et 20 % en poids, par rapport aux composants non volatils de la composition de revêtement, d'un acide phosphorique bloqué avec une amine.

9. Composition de revêtement selon la revendication 8, **caractérisée en ce que** le composé (V) utilisé comme agent de réticulation est tel que défini dans l'une quelconque des revendications précédentes 2 à 7.

10. Composition de revêtement selon l'une quelconque des revendications 8 et 9, **caractérisée en ce qu'**au moins un liant est un composé (B) contenant des groupes hydroxy.

11. Composition de revêtement selon la revendication 10, **caractérisée en ce que** le composé (B) contenant des groupes hydroxy est un polyol de faible masse moléculaire, un polyol oligomère, un polyol polymère ou un mélange de ces polyols.

12. Composition de revêtement selon la revendication 11, **caractérisée en ce que** le polyol polymère est un poly(méth)acrylatepolyol.

13. Utilisation d'une composition de revêtement selon l'une quelconque des revendications 8 à 12, pour la production d'un revêtement.
